# EUROPEAN PATENT APPLICATION

(11) **EP 2 337 308 A2**
(43) Date of publication of application: **22.06.2011**
(21) Application number: 10194000.5
(22) Date of filing: 07.12.2010
(51) Int. Cl.: H04L 29/06

(54) **Transmission and reception method and apparatus for processing downloading and playing of multimedia electronic file in parallel in uni-directional transmission environment**

(30) Priority: 21.12.2009 KR 20090128167
(71) Applicant: Electronics and Telecommunications Research Institute, Daejeon 305-700 (KR)
(72) Inventor: Park, Min-Sik, Daejeon 305-728 (KR); Kim, Hui Yong, Daejeon 305-330 (KR); Lee, Han Kyu, Daejeon 302-781 (KR); Hong, Jin Woo, Daejeon 305-500 (KR)
(74) Representative: Betten & Resch

(57) **Abstract**

Provided is a transmission and reception method and apparatus for processing downloading and playing of a multimedia electronic file in parallel in a uni-directional transmission environment. A transmission apparatus may include: an electronic file separator (110) to separate a multimedia electronic file into a header and a payload, to generate a header segment file using the header, and to generate a payload segment file using the payload; a download protocol capsulation unit (120) to generate a header transmission stream and a payload transmission stream by capsulating the header segment file and the payload segment file according to a data transmission protocol; a layer channel multiplexer (130) to multiplex the header transmission stream with a transmission stream of a high channel protection level, and to multiplex the payload transmission stream with a transmission stream of a low channel protection level; and a radio frequency (RF) transmitter (150) to transmit the multiplexed transmission streams.

## Description

### 1. Field of the invention

Embodiments of the present invention relate to a transmission and reception method and apparatus for processing downloading and playing of a multimedia electronic file in parallel in a uni-directional transmission environment.

### 2. Description of the Related Art

Generally, a transmission environment where a user may download an electronic file may be classified into a 'bi-directional transmission network' and a 'uni-directional transmission network'.

A scheme of downloading the electronic file over the 'bi-directional transmission network' may employ an Automatic Repeat Request (ARQ) scheme. In this instance, when an error of download data occurs in a transmission path, a reception end may detect the error and request a transmission end for a retransmission via a bi-directional channel and thereby receive again corresponding data. Accordingly, in the bi-directional transmission environment, data constituting the electronic file being downloaded may be sequentially stored error-free in a buffer of the reception end. When a predetermined period of time is elapsed, the same electronic file as the electronic file transmitted from the transmission end may be stored in the reception end.

In this instance, a capacity of a multimedia electronic file including multimedia data and multimedia play information may be greater than a capacity of a general electronic file and thus it takes a long time to download the multimedia electronic file. Accordingly, there is provided a function of enabling a user to use the multimedia electronic file without waiting until the multimedia electronic file is completely downloaded.

For the above purpose, the reception end may set a size of a buffer configured to receive data, based on an amount of time used for processing error data according to the ARQ scheme and an amount of time used for playing multimedia data within the multimedia electronic file. In addition, when the transmission end transmits, to the reception end, play information used to play the multimedia data within the multimedia electronic file in an early downloading process, it is possible to provide the user with a seamless multimedia service such as an image, a voice, and the like, even though the multimedia electronic file is being downloaded.

A scheme of downloading the electronic file over the 'uni-directional transmission network' may not employ the ARQ scheme that needs to use the bi-directional channel in order to process a data error. Accordingly, for correcting of error data, the transmission end may periodically transmit the electronic file to the reception end.

In this case, when an error occurs during the transmission, the transmission end needs to wait until a subsequent transmission interval starts so as to correct the found error. Also, an average amount of time delayed to download and play the electronic file at the same transmission rate may be relatively great compared to the bi-directional transmission environment.

Accordingly, when a transmission error occurs while multimedia data is being played, playing of the multimedia data may be suspended during at least one transmission interval.

In addition, when the multimedia electronic file is desired to be played while being downloaded, the reception end needs to initially receive play information of the multimedia electronic file. However, since a random error occurs in the uni-directional transmission environment, it is difficult to guarantee that multimedia data play information within the multimedia electronic file may be received by the reception end within a maximally short period of time.

For example, when a function of playing the multimedia electronic file while downloading the multimedia electronic file is configured in the uni-directional transmission network, it is difficult to guarantee that the reception end may maximally quickly receive multimedia data play information included in the multimedia electronic file. Thus, an amount of wait time used to start playing the multimedia data may increase. In addition, an amount of time that playing the multimedia data included in the multimedia electronic file is delayed may also increase. Accordingly, a screen and a voice may be suspended during a long period of time while playing the multimedia data.

### SUMMARY

An aspect of the present invention provides a transmission and reception method and apparatus that may reduce an amount of time delayed to start playing multimedia data within a multimedia electronic file while downloading the multimedia electronic file in a uni-directional transmission network, and an amount of suspended time where playing is suspended while playing the multimedia data.

According to an aspect of the present invention, there is provided a transmission apparatus, including: an electronic file separator to separate a multimedia electronic file into a header and a payload, to generate a header segment file using the header, and to generate a payload segment file using the payload; a download protocol capsulation unit to generate a header transmission stream and a payload transmission stream by capsulating the header segment file and the payload segment file according to a data transmission protocol; a layer channel multiplexer to multiplex the header transmission stream together with a transmission stream of a high channel protection level, and to multiplex the payload transmission stream together with a transmission stream of a low channel protection level; and a radio frequency (RF) transmitter to transmit the multiplexed transmission stream of the high channel protection level and the multiplexed transmission stream of the low channel protection level.

According to another aspect of the present invention, there is provided a reception apparatus, including: an RF receiver to receive an RF signal, to modulate the received RF signal, and to thereby generate an encoded transmission stream; a layer channel demultiplexer to extract a header transmission stream from a transmission stream of a high channel protection level included in the encoded transmission stream, and to extract a payload transmission stream from a transmission stream of a low channel protection level; a download protocol decapsulation unit to extract a header segment file from the header transmission stream, and to extract a payload segment file from the payload transmission stream; and a segment file synthesizer to configure a multimedia electronic file using the extracted header segment file and the payload segment file.

According to still another aspect of the present invention, there is provided a transmission method, including: generating segment files using a multimedia electronic file; generating transmission streams by capsulating the segment files according to a data transmission protocol; multiplexing the transmission streams together with a transmission stream of a high channel protection level and a transmission stream of a low channel protection level; performing channel encoding for the multiplexed transmission stream of the high channel protection level and the multiplexed transmission stream of the low channel protection level; and transmitting the channel encoded transmission streams.

According to yet another aspect of the present invention, there is provided a reception method, including: generating an encoded transmission stream by modulating a received REF signal; decoding the encoded transmission stream to a transmission stream of a high channel protection level and a transmission stream of a low channel protection level; extracting a header transmission stream from the decoded transmission stream of the high channel protection level, and extracting a payload transmission stream from the decoded transmission stream of the low channel protection level; extracting a header segment file from the header transmission stream, and extracting a payload segment file from the payload transmission stream; and configuring a multimedia electronic file using the extracted header segment file and the payload segment file.

### EFFECT

According to embodiments of the present invention, when a user desires to simultaneously download and play a multimedia electronic file in a uni-directional transmission environment, the user may immediately play multimedia data even though an error occurs in the multimedia data being transmitted. In addition, the user may store error-free the multimedia electronic file.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a block diagram illustrating a transmission apparatus according to an embodiment of the present invention;
FIG. 2 is a diagram illustrating an example of separating a multimedia electronic file according to an embodiment of the present invention;
FIG. 3 is a flowchart illustrating a transmission method according to an embodiment of the present invention;
FIG. 4 is a block diagram illustrating a reception apparatus according to an embodiment of the present invention; and
FIG 5 is a flowchart illustrating a reception method according to an embodiment of the present invention.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

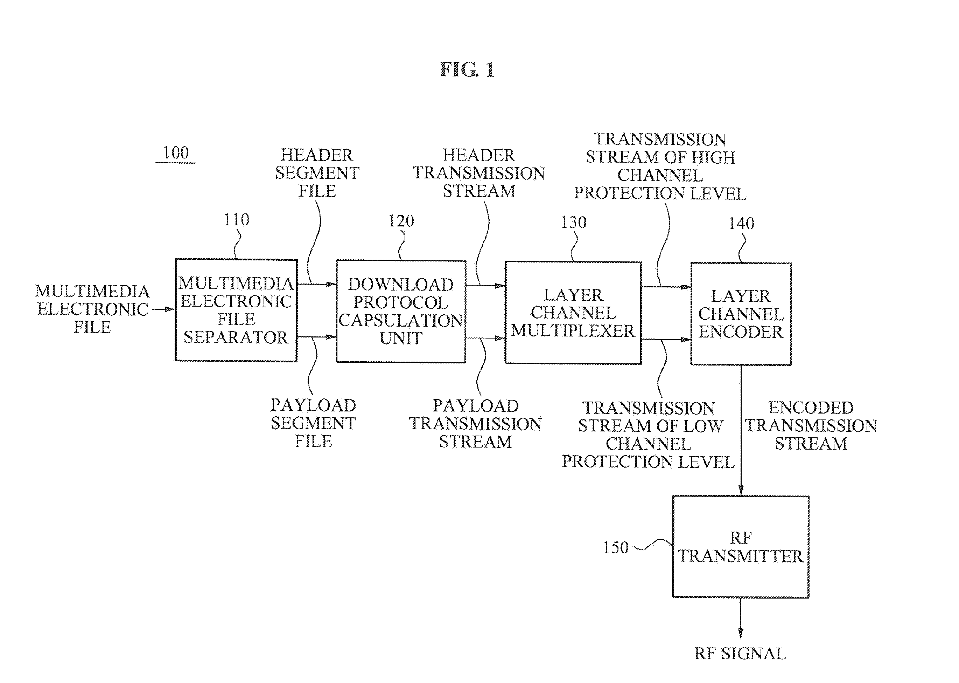

FIG. 1 is a block diagram illustrating a transmission apparatus 100 according to an embodiment of the present invention.

Referring to FIG. 1, the transmission apparatus 100 may include an electronic file separator 110, a download protocol capsulation unit 120, a layer channel multiplexer 130, a layer channel encoder 140, and a radio frequency (RF) transmitter 150.

The electronic file separator 110 may read a multimedia electronic file to separate the multimedia electronic file into a header containing multimedia play information and a payload containing multimedia access units. Also, the electronic file separator 110 may generate the header and the payload as a header segment file and a payload segment file, respectively, that are suitable for a periodical transmission.

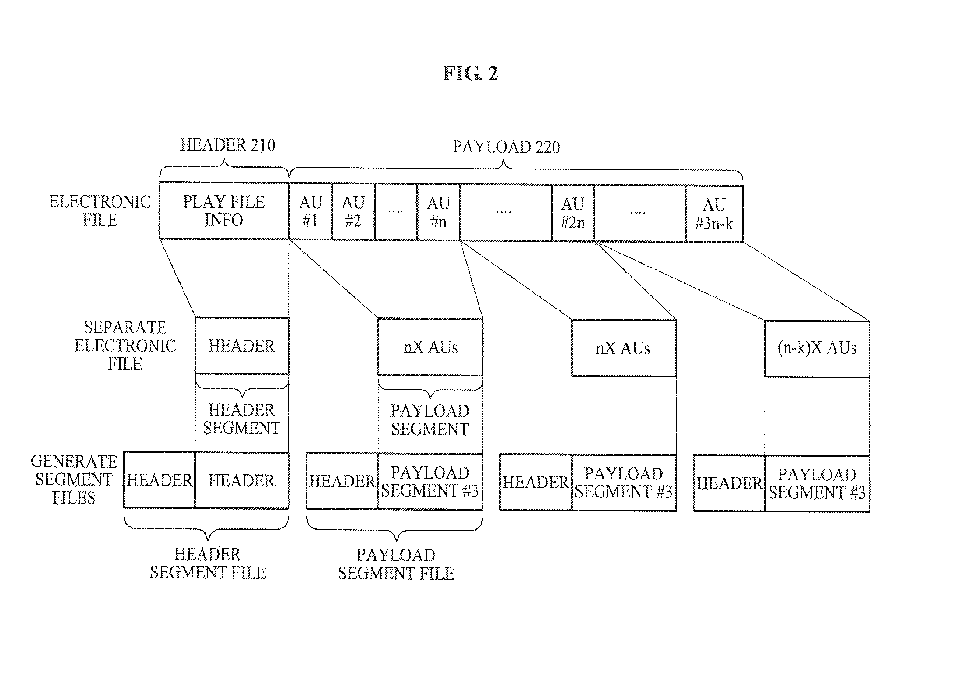

FIG. 2 is a diagram illustrating an example of separating a multimedia electronic file according to an embodiment of the present invention.

As shown in FIG. 2, the multimedia electronic file may include a header 210 containing information used to play a multimedia access unit, and a payload 220 containing the multimedia access unit. The electronic file separator 110 may separate the multimedia electronic file into the header 210 and the payload 220 by analyzing the multimedia electronic file. The electronic file separator 110 may generate the header 210 as a header segment file containing multimedia play information. The electronic file separator 110 may generate a payload segment file by dividing the multimedia access unit, included in the payload 220, based on integer multiples.

In this instance, the electronic file separator 110 may generate the payload segment file by including, in the payload segment file, a header containing information used to reassemble a segment file combining the header segment file and the payload segment file. The electronic file separator 110 may include, in the header segment file, a 'segment file identifier' capable of identifying whether a corresponding segment file corresponds to a portion of the header 210 or the payload 220, a 'header segment' contained in a payload of the payload segment file, 'segment file location information' indicating a relative location of an initial payload segment file in the multimedia electronic file, and the like, The electronic file separator 110 may additionally include, in a header of the payload segment file, 'segment file order information' indicating an order of the corresponding segment file, 'a number of multimedia access units' included in the corresponding segment file, and the like.

The electronic file separator 110 may transmit the header segment file and the payload segment file to the download protocol capsulation unit 120.

The download protocol capsulation unit 120 may generate a header transmission stream and a payload transmission stream by capsulating the header segment file and the payload segment file according to a data transmission protocol, which are suitable for periodical transmission in a corresponding transmission network. The download protocol capsulation unit 120 may transmit the header transmission stream and the payload transmission stream to the layer channel multiplexer 130.

The layer channel multiplexer 130 may generate a 'transmission stream of a high channel protection level' by multiplexing the header transmission stream with a transmission stream transmitted to a layer of a relatively high channel protection level. Also, the layer channel multiplexer 130 may generate a 'transmission stream of a low channel protection level' by multiplexing the payload transmission stream with a transmission stream transmitted to a layer of a relatively low channel protection level. The layer channel multiplexer 130 may transmit, to the layer channel encoder 140, the transmission stream of the high channel protection level and the transmission stream of the low channel protection level.

The layer channel encoder 140 may perform hierarchical channel encoding for the transmission stream of the high channel protection level and the transmission stream of the channel protection level. The layer channel encoder 140 may transmit, to the RF transmitter 150, the channel encoded transmission stream of the high channel protection level and the channel encoded transmission stream of the low channel protection level.

The RF transmitter 150 may transmit an RF signal by modulating the channel encoded transmission stream of the high channel protection level and the channel encoded transmission stream of the low channel protection level.

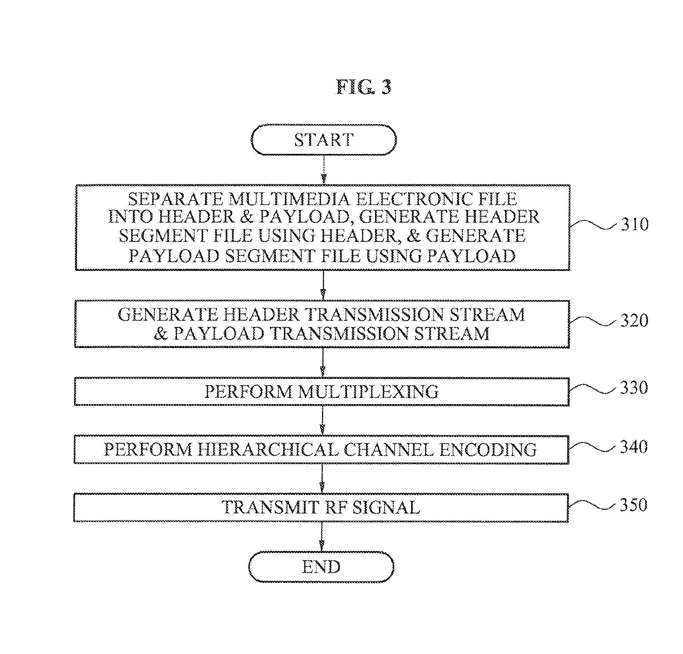

FIG. 3 is a flowchart illustrating a transmission method according to an embodiment of the present invention.

In operation 310, the transmission apparatus 100 may separate an input multimedia electronic file into a header and a payload, and may generate a header segment file using the header and may generate a payload segment file using the payload.

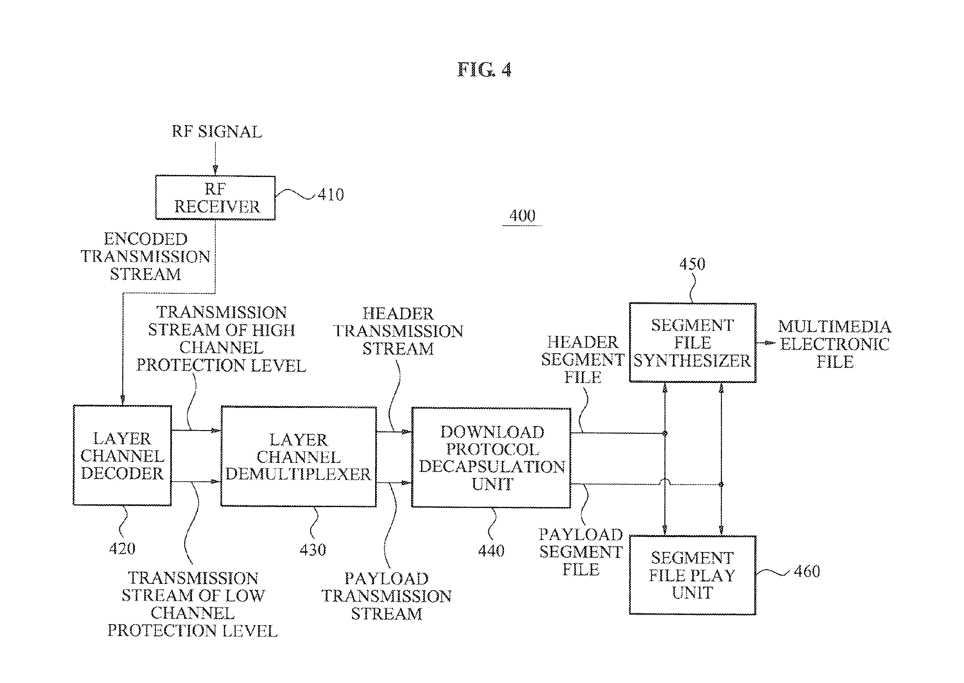

In operation 320, the transmission apparatus 100 may generate a header transmission stream and a payload transmission stream by capsulating the header segment file and the payload segment file according to a data transmission protocol, which are suitable for periodical transmission in a corresponding transmission network. Here, the transmission apparatus 100 may generate the header transmission stream and the payload transmission stream by setting a transmission interval in each of the header segment file and the payload segment file. Since a reception apparatus 400 of FIG. 4 needs to initially receive the header segment file, the transmission interval of the header segment file may be set to be relatively shorter than the transmission interval of the payload segment file.

In operation 330, the transmission apparatus 100 may multiplex the header transmission stream with another transmission stream transmitted to a layer having a relatively high channel protection level, and may multiplex the payload transmission steam with another transmission stream transmitted to a layer having a relatively low channel protection level.

In operation 340, the transmission apparatus 100 may perform hierarchical channel encoding for the multiplexed transmission stream of the high channel protection level and the multiplexed transmission stream of the low channel protection level.

In operation 350, the transmission apparatus 100 may transmit an RF signal to the reception apparatus 400 by modulating the channel encoded transmission stream of the high channel protection level and the channel encoded transmission stream of the low channel protection level.

FIG. 4 is a block diagram illustrating the reception apparatus 400 according to an embodiment of the present invention.

Referring to FIG. 4, the reception apparatus 400 may include an RF receiver 410, a layer channel decoder 420, a layer channel demultiplexer 430, a download protocol decapsulation unit 440, a segment file synthesizer 450, and a segment file play unit 460.

The RF receiver 410 may receive an RF signal from the transmission apparatus 100, and may generate an encoded transmission stream by modulating the received RF signal. The RF receiver 410 may transmit the encoded transmission stream to the layer channel decoder 420.

The layer channel decoder 420 may decode the encoded transmission stream to a transmission stream of a high channel protection level and a transmission stream of a low channel protection level, and may perform error correction. The layer channel decoder 420 may transmit, to the layer channel demultiplexer 430, the decoded and error corrected transmission stream of the high channel protection level and transmission stream of the low channel protection level.

The layer channel demultiplexer 430 may extract a header transmission stream from the transmission stream of the high channel protection level, and may extract a payload transmission stream from the transmission stream of the low channel protection level. The layer channel demultiplexer 430 may transmit, to the download protocol decapsulation unit 440, the extracted header transmission stream and payload transmission stream.

The download protocol decapsulation unit 440 may extract a header segment file from the header transmission stream, and may extract a payload segment file from the payload transmission stream. The download protocol decapsulation unit 440 may transmit the extracted header segment file and payload segment file to each of the segment file synthesizer 450 and the segment file play unit 460.

The segment file synthesizer 450 may generate a single multimedia electronic file using the header segment file and the payload segment file.

For example, the segment file synthesizer 450 may extract electronic file header information from the header segment file, and may write the extracted electronic file header information in the multimedia electronic file. Also, the segment file synthesizer 450 may extract a multimedia access unit and an access unit location from header information included in the payload segment file, and may write the extracted multimedia access unit in the extracted access unit location of the multimedia electronic file.

When the multimedia access unit is dropped, the segment file synthesizer 450 may wait until a retransmitted multimedia access unit is received. When the retransmitted multimedia access unit is received, the segment file synthesizer 450 may write the retransmitted multimedia access unit in the extracted access unit location of the multimedia electronic file.

The segment file play unit 460 may play in real time the multimedia electronic file using the header segment file and the payload segment file. For example, the segment file play unit 460 may analyze multimedia play information from the header segment file, may extract a multimedia access unit from the payload segment file, and may sequentially play the extracted multimedia access unit according to the analyzed multimedia play information.

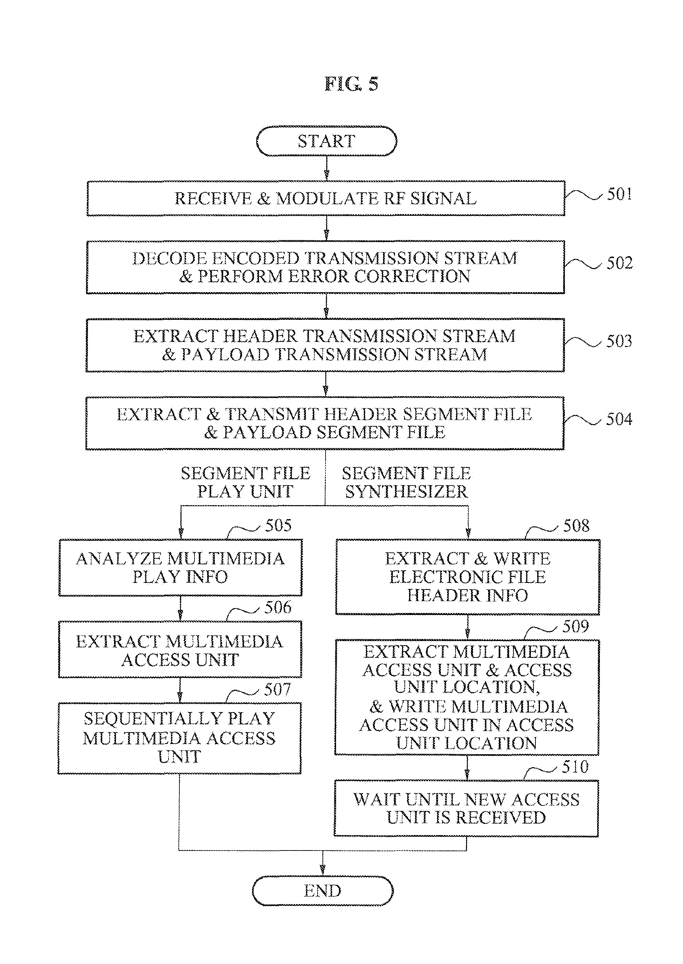

FIG. 5 is a flowchart illustrating a reception method according to an embodiment of the present invention.

In operation 501, the reception apparatus 400 may receive an RF signal from the transmission apparatus 100, and may generate an encoded transmission stream by modulating the received RF signal.

In operation 502, the reception apparatus 400 may decode the encoded transmission stream to a transmission stream of a high channel protection level and a transmission stream of a low channel protection level, and may perform error correction.

In operation 503, the reception apparatus 400 may extract a header transmission stream from the transmission stream of the high channel protection level, and may extract a payload transmission stream from the transmission stream of the low channel protection level, through demultiplexing.

In operation 504, the reception apparatus 400 may extract a header segment file from the header transmission stream, and may extract a payload segment file from the payload transmission stream. For simultaneous download and play using the extracted header segment file and the payload segment file, the reception apparatus 400 may transmit the extracted header segment file and payload segment file to each of the segment file synthesizer 450 and the segment file play unit 460.

In operation 505, the segment file play unit 460 may analyze multimedia play information of the multimedia electronic file from initially extracted electronic file header information. In operation 506, the segment file play unit 460 may extract a multimedia access unit from the payload segment file. In operation 507, even though the extracted multimedia access unit is dropped, the segment file play unit 460 may sequentially play the extracted multimedia access unit according to the analyzed multimedia play information.

In operation 508, the segment file synthesizer 450 may extract electronic file header information from the header segment file, and may write the extracted electronic file header information in the multimedia electronic file. In operation 509, the segment file synthesizer 450 may extract a multimedia access unit and an access unit location from header information included in the payload segment file, and may write the extracted multimedia access unit in the extracted access unit location of the multimedia electronic file. In operation 510, when the extracted multimedia access unit is dropped, the segment file synthesizer 450 may wait until the retransmitted multimedia access unit is received. When the retransmitted multimedia access unit is received, the segment file synthesizer 450 may write the received retransmitted multimedia access unit in a corresponding location of the multimedia electronic file.

When the same multimedia electronic file as the transmitted multimedia electronic file is received by the reception apparatus 400, the all the process may be terminated.

The above-described exemplary embodiments of the present invention may be recorded in computer-readable media including program instructions to implement various operations embodied by a computer. The media may also include, alone or in combination with the program instructions, data files, data structures, and the like. The described hardware devices may be configured to act as one or more software modules in order to perform the operations of the above-described exemplary embodiments of the present invention, or vice versa.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A transmission apparatus, comprising:
an electronic file separator to separate a multimedia electronic file into a header and a payload, to generate a header segment file using the header, and to generate a payload segment file using the payload;
a download protocol capsulation unit to generate a header transmission stream and a payload transmission stream by capsulating the header segment file and the payload segment file according to a data transmission protocol;
a layer channel multiplexer to multiplex the header transmission stream together with a transmission stream of a high channel protection level, and to multiplex the payload transmission stream together with a transmission stream of a low channel protection level; and
a radio frequency (RF) transmitter to transmit the multiplexed transmission stream of the high channel protection level and the multiplexed transmission stream of the low channel protection level.

2. The transmission apparatus of claim 1, further comprising:
a layer channel encoder to perform hierarchical channel encoding for the multiplexed transmission stream of the high channel protection level and the multiplexed transmission stream of the low channel protection level,
wherein the RF transmitter transmit an RF signal by modulating the channel encoded transmission stream of the high channel protection level and the channel encoded transmission stream of the low channel protection level.

3. The transmission apparatus of claim 1 or 2, wherein the electronic file separator separates the multimedia electronic file into the header containing multimedia play information and the payload containing a multimedia access unit.

4. The transmission apparatus of claim 1, 2 or 3, wherein:
the electronic file separator comprises, in the header segment file, at least one of a segment file identifier, a header segment comprised in the payload segment file, and payload segment file location information, and
the electronic file separator comprises, in a header of the payload segment file, segment file order information or a number of multimedia access units.

5. A reception apparatus, comprising:
an RF receiver to receive an RF signal, to modulate the received RF signal, and to thereby generate an encoded transmission stream;
a layer channel demultiplexer to extract a header transmission stream from a transmission stream of a high channel protection level comprised in the encoded transmission stream, and to extract a payload transmission stream from a transmission stream of a low channel protection level;
a download protocol decapsulation unit to extract a header segment file from the header transmission stream, and to extract a payload segment file from the payload transmission stream; and
a segment file synthesizer to configure a multimedia electronic file using the extracted header segment file and the payload segment file.

6. The reception apparatus of claim 5, further comprising:
a layer channel decoder to decode the encoded transmission stream to the transmission stream of the high channel protection level and the transmission stream of the low channel protection level, and to perform error correction.

7. The reception apparatus of claim 5 or 6, wherein:
the segment file synthesizer extracts electronic file header information from the header segment file to thereby write the extracted electronic file header information in the multimedia electronic file, and
the segment file synthesizer extracts a multimedia access unit and an access unit location from header information comprised in the payload segment file to thereby write the extracted multimedia access unit in the extracted access unit location of the multimedia electronic file.

8. The reception apparatus of claim 7, wherein:
when the multimedia access unit is dropped, the segment file synthesizer waits until a retransmitted multimedia access unit is received, and
when the retransmitted multimedia access unit is received, the segment file synthesizer writes the retransmitted multimedia access unit in the extracted access unit location of the multimedia electronic file.

9. The reception apparatus of one of claims 5 to 8, further comprising:
a segment file play unit to analyze multimedia play information from the header segment file, to extract a multimedia access unit from the payload segment file, and to sequentially play the extracted multimedia access unit according to the analyzed multimedia play information.

10. A transmission method, comprising:
generating segment files using a multimedia electronic file;
generating transmission streams by capsulating the segment files according to a data transmission protocol;
multiplexing the transmission streams together with a transmission stream of a high channel protection level and a transmission stream of a low channel protection level;
performing channel encoding for the multiplexed transmission stream of the high channel protection level and the multiplexed transmission stream of the low channel protection level; and
transmitting the channel encoded transmission streams.

11. The transmission method of claim 10, wherein the generating of the segment files comprises:
separating the multimedia electronic file into a header containing multimedia play information and a payload containing a multimedia access unit;
generating a header segment file using the separated header; and
generating a payload segment file using the separated payload.

12. The transmission method of claim 10 or 11, wherein the transmitting comprises to transmitting an RF signal by modulating the channel encoded transmission stream of the high channel protection level and the channel encoded transmission stream of the low channel protection level.

13. A reception method, comprising:
generating an encoded transmission stream by modulating a received RF signal;
decoding the encoded transmission stream to a transmission stream of a high channel protection level and a transmission stream of a low channel protection level;
extracting a header transmission stream from the decoded transmission stream of the high channel protection level, and extracting a payload transmission stream from the decoded transmission stream of the low channel protection level;
extracting a header segment file from the header transmission stream, and extracting a payload segment file from the payload transmission stream; and
configuring a multimedia electronic file using the extracted header segment file and the payload segment file.

14. The reception method of claim 13, wherein the configuring comprises:
extracting electronic file header information from the header segment file to thereby write the extracted electronic file header information in the multimedia electronic file;
extracting a multimedia access unit and a access unit location from header information comprised in the payload segment file; and
writing the extracted multimedia access unit in the extracted access unit location of the multimedia electronic file.

15. The reception method of claim 14, wherein the writing of the multimedia access unit comprises:
waiting until a retransmitted multimedia access unit is received when the multimedia access unit is dropped; and
writing the retransmitted multimedia access unit in the extracted access unit location when the retransmitted multimedia access unit is received.
